Europäisches Patentamt

European Patent Office

Office européen des brevets

(19)

(11) Numéro de publication: **0 270 399 B1**

## FASCICULE DE BREVET EUROPEEN

(12)

(45) Date de publication de fascicule du brevet:
**24.07.91**

(51) Int. Cl.⁵: **B60G 3/26**, B62D 7/00,
B60G 17/00

(21) Numéro de dépôt: **87402395.5**

(22) Date de dépôt: **23.10.87**

(54) **Dispositif support de roue directrice et éventuellement motrice de véhicule et application notamment à un véhicule amphibie.**

(30) Priorité: **31.10.86 FR 8615186**

(43) Date de publication de la demande:
**08.06.88 Bulletin 88/23**

(45) Mention de la délivrance du brevet:
**24.07.91 Bulletin 91/30**

(84) Etats contractants désignés:
**AT CH DE ES GB GR IT LI NL SE**

(56) Documents cités:
**DE-C- 969 375**          **FR-A- 940 078**
**FR-A- 1 442 746**        **GB-A- 439 688**
**US-A- 2 024 199**        **US-A- 2 552 690**

**PATENT ABSTRACTS OF JAPAN, vol. 10, no.
40 (M-454)[2097], 18th February 1986; & JP-
A-60 193 764 DAIHATSU KOGYO K.K.)
02-10-1985**
(73) Titulaire: **Claux, Philippe**
**26, rue Marcelle Tinayre PALISSE**
**F-19360 Malemort sur Correze(FR)**

(72) Inventeur: **Claux, Philippe**
**26, rue Marcelle Tinayre PALISSE**
**F-19360 Malemort sur Correze(FR)**

(74) Mandataire: **Fruchard, Guy et al**
**CABINET BOETTCHER 23, rue la Boétie**
**F-75008 Paris(FR)**

## Description

La présente invention concerne un dispositif support de roue directrice, et éventuellement motrice, de véhicule et son application à un véhicule.

On connaît de nombreux dispositifs support de roue directrice. La présente invention concerne plus particulièrement un dispositif support de roue directrice permettant de faire varier la garde au sol du véhicule sur lequel il est monté.

Un dispositif selon le préambule de la revendication 1 est connu du document US-A-2 552 690. Il ne permet qu'une variation difficile et minime de la garde au sol. A cause de la réalisation connue de la commande de la direction, une variation importante de la garde au sol du véhicule provoquerait une variation du pincement des roues et des perturbations importantes au niveau des pneumatiques.

Un but de la présente invention est de proposer un dispositif support de roue directrice de véhicule qui permette de maintenir une orientation donnée de la roue quelle que soit la garde au sol et quelle que soit la direction appliquée aux roues.

En vue de la réalisation de ce but, on prévoit selon l'invention un dispositif support de roue directrice de véhicule tel qu'énoncé ci-dessus, dans lequel l'organe de liaison comporte un axe longitudinal autour duquel il est monté pour tourner et l'extrémité de l'organe de liaison adjacente à l'organe de compensation d'inclinaison est reliée au support de palier de roue par une structure bielle-manivelle.

Ainsi, lorsque l'orientation du bras oscillant est modifiée par rapport à la coque du véhicule, l'orientation de l'axe de pivotement est modifiée de façon correspondante de sorte que l'axe de pivotement garde une orientation sensiblement constante par rapport au sol et l'organe de liaison assure en outre la fonction d'organe de commande de l'orientation de la roue autour de l'axe de pivotement, ce qui permet de maintenir l'orientation de la roue constante quelle que soit l'inclinaison du bras oscillant.

Selon un autre aspect avantageux de l'invention, les moyens pour monter le bras oscillant sur la coque du véhicule comportent un arbre d'articulation fixé au bras oscillant perpendiculairement à celui-ci et les moyens de positionnement du bras oscillant comportent une manivelle de positionnement ayant une première extrémité fixée perpendiculairement à l'arbre d'articulation, et une biellette de positionnement fixée à une seconde extrémité de la manivelle de positionnement. Ainsi, un déplacement longitudinal de la biellette de positionnement provoque une modification de l'orientation du bras oscillant et donc une variation de la garde au sol du véhicule.

Selon encore d'autres aspects avantageux de l'invention, la biellette de positionnement est montée pour avoir une longueur réglable entre un point de la coque du véhicule et la seconde extrémité de la manivelle de positionnement, et un ensemble ressort-amortisseur est monté sur la biellette de positionnement en série avec celle-ci. Ainsi, on modifie aisément la garde au sol en agissant sur la longueur de la biellette de positionnement et l'ensemble ressort-amortisseur permet des oscillations d'amplitude modérée autour de la position moyenne du bras oscillant.

Selon un autre aspect de l'invention, le bras oscillant, l'arbre support de l'organe de compensation d'inclinaison du bras oscillant et l'arbre d'articulation sont creux et des moyens d'entraînement de roue s'étendent à l'intérieur des arbres creux et du bras oscillant. Ainsi, par une structure compacte, on obtient une roue qui est non seulement directrice mais également motrice.

Selon un mode de réalisation préféré de l'invention, la roue a une bande de roulement présentant un plan de symétrie et l'axe de pivotement de la roue est contenu dans ce plan de symétrie. Ainsi, une modification de l'orientation de la roue n'entraîne aucun roulement de celle-ci et l'orientation des roues peut donc être modifiée à l'arrêt sans provoquer de glissement même en l'absence de dispositif différentiel.

Selon une application avantageuse de l'invention, un véhicule automobile comporte au moins trois supports de roues selon l'invention et au moins l'une des fonctions de direction, de garde au sol et d'entraînement est assurée sur l'ensemble des roues par un organe de commande unique.

D'autres caractéristiques et avantages de l'invention apparaîtront encore à la lecture de la description qui suit d'un mode de réalisation particulier de l'invention en liaison avec les dessins ci-joints parmi lesquels :

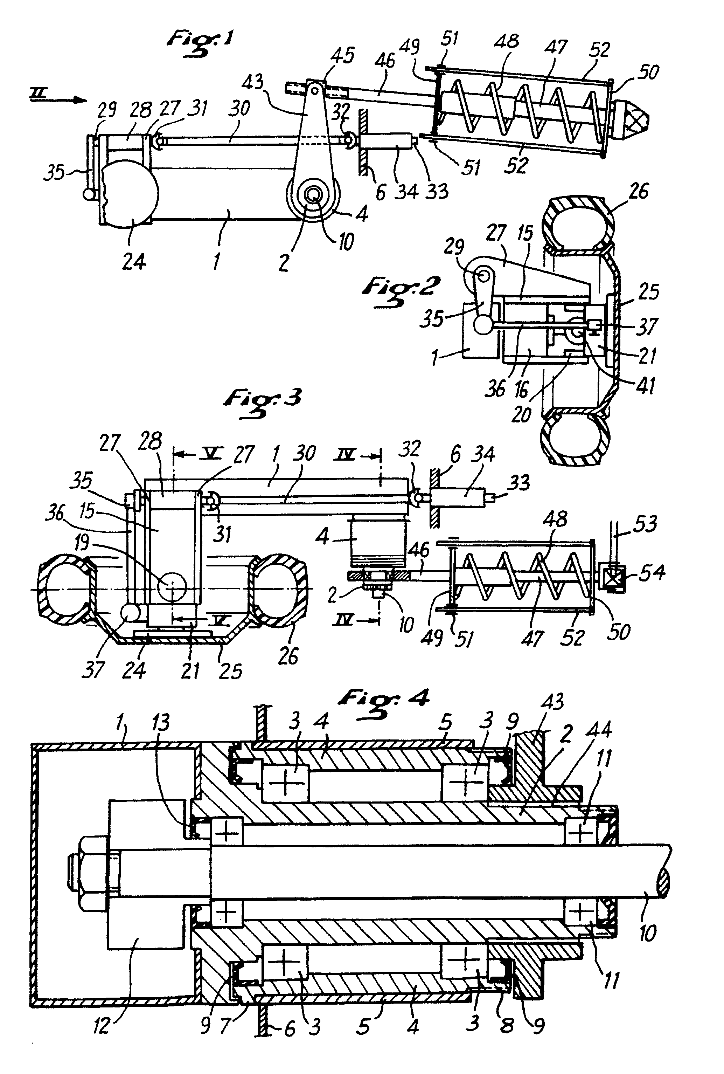

- la figure 1 est une vue en élévation de côté schématique d'un dispositif support de roue selon l'invention représenté sans la roue,
- la figure 2 est une vue en élévation prise selon la direction II de la figure 1, la roue étant représentée en coupe et les moyens de positionnement du bras n'étant pas représentés,
- la figure 3 est une vue de dessus du dispositif de la figure 1,
- la figure 4 est une vue en coupe agrandie selon la ligne IV-IV de la figure 3,
- la figure 5 est une vue en coupe agrandie selon la ligne V-V de la figure 3,
- la figure 6 est une vue de dessus schématique d'un véhicule amphibie équipé de quatre modules selon l'invention.

En référence aux figures, le dispositif support de roues selon l'invention comporte un bras oscillant creux 1 ayant une première extrémité sur laquelle est fixé un arbre d'articulation creux 2 s'étendant perpendiculairement à la direction longitudinale du bras oscillant 1. Le bras oscillant se présente par exemple sous forme d'un caisson allongé suffisamment rigide pour transmettre vers les roues les efforts résultant du poids et des mouvements du véhicule. L'arbre d'articulation 2 est fixé à l'une des parois du bras oscillant 1, par exemple par soudage. L'arbre d'articulation 2 est lui-même monté par l'intermédiaire de roulements 3 dans une douille 4 elle-même engagée dans un manchon 5 fixé à la coque 6 du véhicule. La douille 4 est par exemple maintenue en place dans le manchon 5 au moyen d'une butée 7 du côté externe de la coque 6 du véhicule et d'un écrou vissé sur un filetage 8 du côté interne du véhicule (figure 4). La première extrémité du bras oscillant 1 est ainsi équipée de moyens pour monter le bras oscillant de façon pivotante par rapport à la coque 6 du véhicule selon une direction sensiblement parallèle à un axe longitudinal du véhicule. Si l'on souhaite assurer l'étanchéité entre l'intérieur et l'extérieur de la coque au niveau du passage de l'arbre d'articulation 2, des joints d'étanchéité 9 sont disposés aux extrémités de la douille 4, entre la douille 4 et l'arbre d'articulation 2. Un arbre d'entraînement moteur 10 est monté dans l'arbre d'articulation creux 2 au moyen de roulements 11. Une extrémité de l'arbre 10 s'étend à l'intérieur du bras oscillant 1 et porte un pignon denté 12 fixé sur l'arbre 10 . Un joint d'étanchéité torique 13 est éventuellement prévu entre l'arbre d'entraînement 10 et l'arbre d'articulation 2.

A l'extrémité opposée à l'arbre d'articulation 2, le bras oscillant 1 comporte un arbre support creux 14 fixé perpendiculairement à la dimension longitudinale du bras oscillant 1 et s'étendant donc parallèlement à l'arbre d'articulation 2. Dans le mode de réalisation illustré, l'arbre support 14 s'étend du même côté que l'arbre d'articulation 2 par rapport au bras oscillant 1. Des plaques nervurées 15 s'étendent parallèlement à l'arbre support 14 et sont fixées à la cage externe 16 de roulements 17 montés sur l'arbre support 14. Des joints d'étanchéité toriques 18 assurent l'étanchéité entre la cage 16 et l'arbre support 14. A leur extrémité opposée au bras oscillant 1, les plaques 15 comportent des ouvertures dans lesquelles sont engagés des ergots de pivotement 19 portés par les ailes 20 d'un support de palier de roue 21. Les ergots 19 réalisent ainsi un axe de pivotement pour le support de palier de roue 21. Un palier de roue 22 est monté à l'intérieur du support de palier de roue 21 et supporte un arbre de roue 23 se terminant vers l'extérieur par un flasque 24 sur lequel la jante de roue 25 est montée de façon habituelle, par exemple au moyen de boulons. La jante de roue 25 porte un pneumatique 26 ayant une bande de roulement symétrique par rapport à un plan contenant l'axe de pivotement 19 du support de palier de roue 21.

Des joues 27 sont fixées perpendiculairement à l'une des plaques nervurées 15 et supportent un palier 28 dans lequel tourillonne un tronçon d'arbre 29 relié à un organe de liaison allongé 30 par l'intermédiaire d'un joint de cardan 31. L'extrémité opposée de l'organe de liaison 30 est reliée par l'intermédiaire d'un joint de cardan 32 à un arbre de commande de direction 33 tourillonnant dans un palier 34 fixé sur une partie de la coque 6 du véhicule s'étendant perpendiculairement au bras oscillant 1. L'organe de liaison 30 s'étend parallèlement au bras oscillant 1 de façon que l'ensemble comprenant le bras oscillant 1, une partie de la coque 6 du véhicule, l'ensemble mobile monté sur l'arbre support 14 et l'organe de liaison 30 forme un parallélogramme articulé. On constate que lors de la déformation de ce parallélogramme, l'axe de pivotement formé par les ergots de pivotement 19 conserve une orientation constante et les plaques 15 forment donc un organe de compensation d'inclinaison du bras oscillant 1.

Une manivelle 35 est fixée à l'extrémité de l'arbre 29 opposée au joint de cardan 31 et supporte une biellette de direction 36 elle-même reliée au support de palier de roue 21 par l'intermédiaire d'une rotule 37. Ainsi, l'organe de liaison 30 sert non seulement à former l'un des côtés du parallélogramme déformable mais sert également d'arbre de transmission de la commande de direction.

Un tronçon d'arbre de transmission d'entraînement 38 est monté à l'intérieur de l'arbre support creux 14 par l'intermédiaire de roulements 39. A une extrémité s'étendant à l'intérieur du bras oscillant 1, l'arbre de transmission 38 comporte un pignon denté 40 et à l'extrémité opposée, l'arbre de transmission 38 est relié à l'arbre de roue 23 par un joint de cardan 41 dont les axes d'articulation sont dans un plan contenant l'axe de pivotement des ergots 19. Des joints toriques 42 sont prévus au voisinage des extrémités de l'arbre de transmission 38 pour assurer une étanchéité entre l'arbre de transmission 38 et l'arbre support creux 14. Le pignon denté 12 et le pignon denté 40 sont reliés l'un à l'autre d'une façon classique (non représentée) soit par une chaîne, soit par une série de pignons intermédiaires montés tourillonnant à l'intérieur du bras oscillant 1.

La position moyenne du bras oscillant 1 est déterminée par des moyens de positionnement comprenant une manivelle de positionnement 43 solidaire de l'arbre d'articulation 2, par exemple au moyen de cannelures 44 (figure 4) prévues à l'extrémité de l'arbre d'articulation 2 débouchant à l'intérieur du véhicule. La manivelle 43 s'étend perpendiculairement à l'arbre d'articulation 2. A son extrémité opposée à l'arbre d'articulation 2, la manivelle de positionnement 43 porte un écrou 45 monté de façon articulée à l'extrémité de la biellette de positionnement 43 perpendiculairement à celle-ci. L'extrémité filetée d'une biellette de positionnement 46 est engagée dans l'écrou 45. La biellette de positionnement 46 est reliée en série avec un amortisseur 47 disposé à l'intérieur d'un ressort 48 lui-même retenu entre une plaque 49 fixée à l'une des parties de l'amortisseur 47 et une plaque 50 fixée à l'autre partie de l'amortisseur 47. La plaque 49 comporte des guides 51 dans lesquels s'étendent des tiges 52 reliées à la plaque 50. La plaque 50 est reliée à un arbre de positionnement de bras oscillant 53 par une noix 54 solidaire de la coque du véhicule. Lors de la rotation de l'arbre de positionnement 53, la plaque 50 est entraînée en rotation autour de l'axe de l'amortisseur et transmet ce mouvement de rotation à la plaque 49, et donc à la biellette de positionnement 46 par l'intermédiaire des tiges 52. On constate que dans ce mouvement de rotation l'amortisseur n'est donc pas sollicité en rotation mais assure sa fonction d'amortisseur par un déplacement longitudinal rendu possible par le coulissement des tiges 52 dans les guides 51. La rotation de la biellette 46 par rapport à l'écrou 45 provoque une modification de la longueur efficace de la biellette 46 et donc une modification de la position moyenne du bras oscillant 1, le bras oscillant 1 pouvant bien entendu osciller autour de cette position moyenne en raison des variations de longueur possibles de l'amortisseur 47 et du ressort 48.

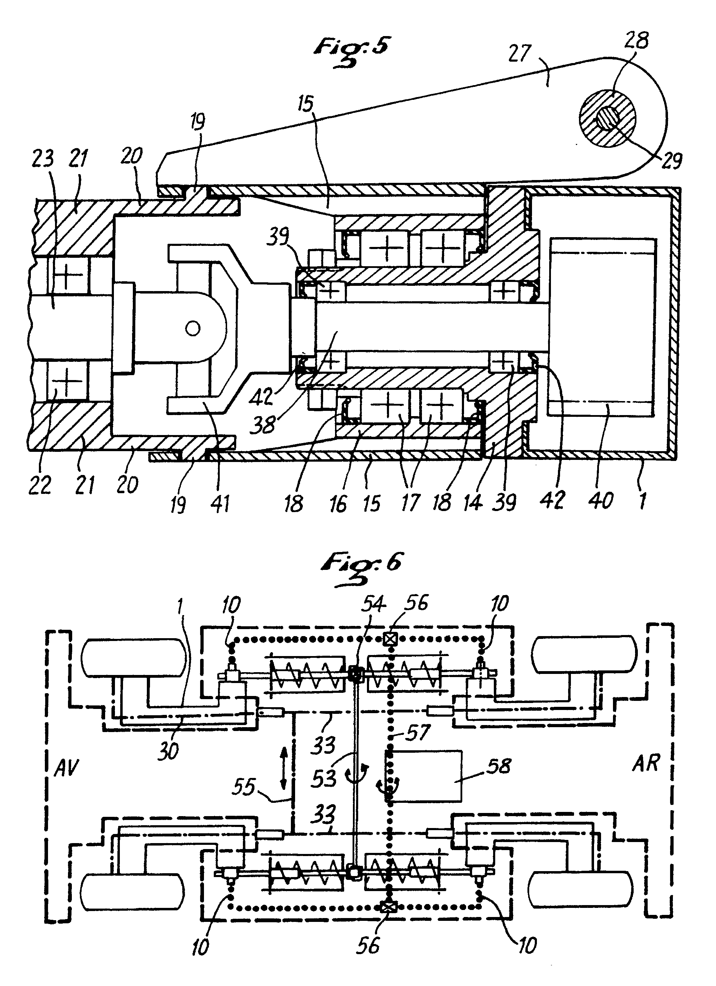

On remarque que lors des variations de position du bras oscillant 1, la longueur des lignes d'arbre de direction et d'entraînement du véhicule n'est pas modifiée et il est donc possible de faire varier de façon importante la garde au sol du véhicule sans perturber les fonctions de direction et d'entraînement. La figure 6 illustre de façon schématique un véhicule amphibie équipé de quatre supports de roue selon l'invention. On remarque tout d'abord que ces quatre supports de roue sont exactement identiques au point de vue de la structure, la seule modification à apporter à un support de roue en fonction de sa position sur le véhicule étant la position du palier 28 par rapport à l'axe support 14 dans la mesure où l'on souhaite que la ligne d'arbre de direction soit toujours au-dessus du bras oscillant 1. Sur la figure 6, la coque du véhicule est illustrée par un trait en tirets épais, la cinématique de positionnement du bras oscillant 1 est illustrée en trait continu, la cinématique de commande de direction est illustrée en trait mixte épais et la cinématique d'entraînement est illustrée en pointillé épais. On constate que la traversée de la coque par le support de roue ne se fait qu'en deux points pour chaque roue, c'est-à-dire d'une part au niveau du passage de la douille 4 dans le manchon 5 et d'autre part au niveau du passage de l'arbre de direction 33 dans le palier 34 correspondant. Dans les deux cas, on constate que le mouvement est seulement un mouvement de rotation et il est donc très aisé d'assurer l'étanchéité au niveau de ces passages. D'autre part, on constate que les arbres de direction 33 des supports de roue situés d'un même côté du véhicule sont au même niveau et il est donc possible d'utiliser un seul arbre de commande de direction 33 pour deux supports de roue. Si l'on souhaite assurer une commande simultanée de la direction des quatre roues il suffit donc de réunir les deux arbres de commande de direction communs 33 par une tringlerie 55, par exemple une chaîne en boucle sans fin entourant des pignons dentés fixés sur les arbres de commande de direction 33.

De même, les moyens de positionnement des bras oscillants 1 peuvent être associés deux à deux sur un même côté du véhicule en prévoyant une noix de renvoi 54 à deux sorties. Dans ce cas, l'arbre de commande de positionnement 53 est commun aux quatre supports de roue et on modifie donc simultanément la garde au sol de façon identique sur les quatre roues par une seule opération de rotation de l'arbre 53. La même structure peut être adoptée au niveau de l'arbre moteur, les arbres d'entraînement 10 de chaque roue étant réunis deux à deux par des noix 56 qui transmettent aux arbres 10 le mouvement d'un arbre d'entraînement commun 57 relié à un moteur 58.

On notera également que le freinage peut être assuré en agissant au niveau de l'arbre 10 ou de l'arbre 57, c'est-à-dire à l'intérieur de la coque du véhicule ce qui est avantageux pour un véhicule amphibie.

On constate que le dispositif support selon l'invention permet d'obtenir des paramètres de chasse, de carrossage et de pincement qui restent constants quelle que soit la valeur de la garde au sol du véhicule. Bien que dans le mode de réalisation illustré par la figure 6 on ait prévu à chaque fois une commande commune pour la direction, la garde au sol et l'entraînement du véhicule, on peut bien entendu prévoir des moyens d'accouplement sélectif permettant d'agir sur ces fonctions au niveau d'une seule roue ou d'une paire de roues.

Bien entendu l'invention n'est pas limitée au mode de réalisation décrit ci-dessus et on peut y apporter des variantes de réalisation sans sortir du cadre de l'invention. En particulier, bien que dans le mode de réalisation illustré l'arbre d'articulation 2 et l'arbre support 14 s'étendent d'un même côté du bras oscillant 1, on peut prévoir des supports de roue dans lesquels ces arbres s'étendent sur deux côtés opposés. On peut en outre prévoir des systèmes d'assistance pneumatiques ou hydrauliques tant pour le positionnement du bras oscillant que pour la manoeuvre de la direction.

A propos de l'ensemble amortisseur-ressort 47-48 on notera que l'on peut prévoir sur les tiges 52 des butées pour la plaque 49 ce qui permet de limiter le débattement et de précontraindre le ressort 48.

Par ailleurs, bien que dans le mode de réalisation illustré, chaque support de roue comprenne un arbre 30 unique qui assure à la fois la fonction de compensation d'inclinaison et de commande de direction, il pourra être nécessaire, en particulier dans le cas de très fortes charges, de prévoir en plus de l'arbre 30 une biellette parallèle à celui-ci mais raccordée à la coque 6 et à la première joue 27 par des articulations simples au lieu d'un joint de cardan, les axes de ces articulations étant bien sûr parallèles aux arbres 10 et 38 et se situant au même niveau que les joints 31 et 32 afin que la biellette reste constamment parallèle à l'arbre 30. Ainsi, la biellette supplémentaire encaisse les efforts axiaux et l'arbre 30 ne transmet que le couple de commande de direction.

**Revendications**

1. Dispositif support de roue directrice de véhicule comprenant un bras oscillant (1) ayant une première extrémité équipée de moyens (2) pour monter le bras oscillant de façon pivotante par rapport à une coque (6) de véhicule selon une direction sensiblement parallèle à un axe longitudinal du véhicule et une seconde extrémité sur laquelle est monté un support de palier de roue (21), ce support de palier de roue étant monté pivotant autour d'un axe de pivotement (19) porté par le bras oscillant ; des moyens de positionnement (46) du bras oscillant pour maintenir le bras oscillant selon une position moyenne prédéterminée ; des moyens (35,36) pour commander l'orientation du support de palier de roue (21) autour de l'axe de pivotement (19); un organe de compensation d'inclinaison (15) du bras oscillant monté pour pivoter autour d'un arbre (14) fixé perpendiculairement au bras oscillant et reliant l'axe de pivotement (19) au bras oscillant ; et un organe de liaison (30) articulé à l'organe de compensation d'inclinaison (15) d'une part et à la coque (6) du véhicule d'autre part pour former avec le bras oscillant (1) un parallélogramme articulé, caractérisé en ce que l'organe de liaison (30) comporte un axe longitudinal autour duquel il est monté pour tourner et en ce que l'extrémité de l'organe de liaison adjacente à l'organe de compensation d'inclinaison (15) est reliée au support de palier de roue (21) par une structure bielle-manivelle (35,36).

2. Dispositif support de roue selon la revendication 1 caractérisé en ce que les moyens pour monter le bras oscillant (1) sur la coque (6) du véhicule comportent un arbre d'articulation (2) fixé au bras oscillant perpendiculairement à celui-ci et en ce que les moyens de positionnement du bras oscillant comportent une manivelle de positionnement (43) ayant une extrémité fixée perpendiculairement à l'arbre d'articulation (2), et une biellette de positionnement (46) fixée à une seconde extrémité de la manivelle de positionnement (43).

3. Dispositif support de roue selon la revendication 2, caractérisé en ce que la biellette de positionnement (46) est montée pour avoir une longueur réglable entre un point de la coque (6) du véhicule et la seconde extrémité de la manivelle de positionnement (43).

4. Dispositif support de roue selon la revendication 2 ou la revendication 3, caractérisé en ce qu'il comporte un ensemble ressort-amortisseur (48, 47) monté sur la biellette de positionnement (46) en série avec celle-ci.

5. Dispositif support de roue selon l'une quelconque des revendications 2 à 4, caractérisé en ce que le bras oscillant (1), l'arbre support (14) de l'organe de compensation d'inclinaison (15) du bras oscillant, et l'arbre d'articulation (2) sont creux et en ce que des moyens d'entraînement de roue (10, 12, 40, 38) s'étendent à l'intérieur des arbres creux et du bras oscillant.

6. Dispositif support de roue selon l'une des revendications 1 à 5, caractérisé en ce que la roue a une bande de roulement présentant un plan de symétrie et en ce que l'axe de pivotement (19) de la roue est contenu dans ce plan de symétrie.

7. Véhicule automobile caractérisé en ce qu'il comporte au moins trois supports de roue selon l'une des revendications 1 à 6.

8. Véhicule selon la revendication 7, caractérisé en ce qu'au moins l'une des fonctions de direction, de garde au sol et d'entraînement est assurée sur l'ensemble des roues par un organe de commande unique.

**Claims**

1. A support system for a steerable vehicle wheel, the system comprising an oscillating arm (1) having a first end fitted with means (2) for mounting the oscillating arm to pivot relative to the body (6) of a vehicle in a direction which is substantially parallel to a longitudinal axis of the vehicle, and having a second end with a wheel bearing support (21) mounted thereon, said wheel bearing support being mounted to swivel about a swivel axis (19) mounted on the oscillating arm; oscillating arm positioning means (46) for maintaining the oscillating arm in a predetermined average position; means (35, 36) for controlling the orientation of the wheel bearing support (21) about the swivel axis (19); a member (15) for compensating the inclination of the oscillating arm, said member being mounted to pivot about a shaft (14) which is fixed perpendicularly to the oscillating arm, and connecting the swivel axis (19) to the oscillating arm; and a link member (30) hinged both to the inclination compensating member (15) and to the vehicle body (6) in order to constitute together with the oscillating arm (1) a hinged parallelogram, the system being characterized in that the link member (30) includes a longitudinal axis about which it is mounted to rotate, and in that the end of the link member adjacent to the inclination compensating member (15) is connected to the wheel bearing support (21) via a linkage structure (35, 36).

2. A wheel support system according to claim 1, characterized in that the means for mounting the oscillating arm (1) on the body (6) of the vehicle comprise a hinged shaft (2) fixed perpendicularly to the oscillating arm, and in that the means for positioning the oscillating arm comprise a positioning crank (43) having one end fixed perpendicularly to the hinge shaft (2), and a positioning link (46) fixed to a second end of the positioning crank (43).

3. A wheel support system according to claim 2, characterized in that the positioning link (46) is mounted to be adjustable in length between a point on the vehicle body (6) and the second end of the positioning crank (43).

4. A wheel support system according to claim 2 or claim 3, characterized in that it includes a spring-and-shockabsorber assembly (48, 47) mounted on the positioning link (46) and in series therewith.

5. A wheel support system according to any one of claims 2 to 4, characterized in that the oscillating arm (1), the support shaft (14) for the member (15) for compensating the inclination of the oscillating arm, and the hinge axis (2) are all hollow, and in that wheel drive means (10, 12, 40, 38) extend inside the hollow shafts and the oscillating arm.

6. A wheel support system according to any one of claims 1 to 5, characterized in that the wheel tread has a plane of symmetry and in that the swivel axis (19) of the wheel lies in said plane of symmetry.

7. A motor vehicle characterized in that it includes at least three wheel supports according to any one of claims 1 to 6.

8. A vehicle according to claim 7, characterized in that at least one of the following functions is provided on all of the wheels by a single control member: steering; ground clearance; and drive.

**Patentansprüche**

1. Trägereinrichtung für ein lenkbares Rad eines Fahrzeuges, umfassend einen Schwingarm (1), dessen erstes Ende mit Mitteln (2) versehen ist, um den Schwingarm am Fahrzeugchassis schwenkbar und im wesentlichen parallel zu einer Längsseite des Fahrzeuges zu montieren, und an dessen zweitem Ende ein Radlagerträger (21) angeordnet ist, wobei der Radlagerträger um eine Schwenkachse (19) schwenkbar gelagert ist, die vom Schwingarm gehalten wird; ferner umfassend eine Stelleinrichtung (46) für den Schwingarm, um diesen Schwingarm in einer bestimmten Mittelstellung zu halten; Mittel (35, 36) zur Lageverstellung des Radlagerträgers (21) um die Schwenkachse (19); ein Organ (15) für den Neigungsausgleich des Schwingarmes, welches um eine senkrecht zum Schwingarm angeordnete Achse (14) schwenkbar montiert ist und die Schwenkachse (19) mit dem Schwingarm verbindet; und ein Verbindungsteil (30), welches einerseits mit dem Neigungsausgleichsorgan (15) und andererseits mit dem Fahrzeugchassis (6) gelenkig verbunden ist und mit dem Schwingarm (1) ein Gelenkparallellogramm bildet, dadurch **gekennzeichnet,** daß das Verbindungsteil (30) eine Längsachse aufweist, um die herum drehbar dieses montiert ist, und daß das dem Neigungsausgleichsorgan (15) nahe Ende des Verbindungsteils mit dem Radlagerträger (21) über eine Kurbelarm-Kurbelstangenanordnung (35,36) verbunden ist.

2. Trägereinrichtung nach Anspruch 1, dadurch **gekennzeichnet,** daß die Mittel zum Montieren des Schwingarmes (1) am Fahrzeugchassis (6) eine Gelenkachse (2) umfassen, die am Schwingarm und senkrecht zu diesem befestigt ist, und daß die Mittel zur Lageverstellung des Schwingarmes einen Verstellkurbelarm (43) aufweisen, dessen eines Ende senkrecht zur Gelenkachse (2) angeordnet ist, sowie eine Verstellkurbelstange (46), die an dem anderen Ende des Verstellkurbelarmes (43) befestigt ist.

3. Trägereinrichtung nach Anspruch 2, dadurch **gekennzeichnet,** daß die Verstellkurbelstange (46) so ausgebildet ist, daß ihre Länge zwischen einem Punkt des Fahrzeugchassis (6) und dem zweiten Ende des Verstellkurbelarmes (43) veränderbar ist.

4. Trägereinrichtung nach Anspruch 2 oder 3, dadurch **gekennzeichnet,** daß sie eine Federdämpferanordnung (48, 47) umfaßt, die an der Verstellkurbelstange (46) und mit dieser in Reihe angeordnet ist.

5. Trägereinrichtung nach einem der Ansprüche 2 bis 4, dadurch **gekennzeichnet,** daß der Schwingarm (1), die Tragachse (14) für das Neigungsausgleichsorgan (15) des Schwingarmes und die Gelenkachse (2) jeweils hohl sind, und daß durch das Innere der hohlen Achsen und des Schwingarmes sich Radantriebsmittel (10, 12, 40, 38) hindurch erstrecken.

6. Trägereinrichtung nach einem der Ansprüche 1 bis 5, dadurch **gekennzeichnet,** daß das Rad eine eine Symmetrieebene definierende Lauffläche hat und daß die Schwenkachse (19) des Rades in dieser Symmetrieebene liegt.

7. Automobil, dadurch **gekennzeichnet,** daß es wenigstens drei Trägereinrichtungen gemäß einem der Ansprüche 1 bis 6 hat.

8. Automobil nach Anspruch 7, dadurch **gekennzeichnet,** daß wenigstens eine der Funktionen der Richtungseinstellung, der Bodenabstandseinstellung und des Radantriebes für die gesamte Radanordnung über ein gemeinsames Steuerorgan durchgeführt wird.

Fig:1

Fig:2

Fig:3

Fig:4

## Fig. 5

## Fig. 6